# EUROPEAN PATENT APPLICATION

(11) **EP 2 712 057 A2**
(43) Date of publication of application: **26.03.2014**
(21) Application number: 13177835.9
(22) Date of filing: 24.07.2013
(51) Int. Cl.: H02K 1/20

(54) **Motor assembly cooling arrangement and method of cooling a motor assembly**

(30) Priority: 25.09.2012 US 201213626517
(71) Applicant: Hamilton Sundstrand Corporation, Windsor Locks, CT 06096-1010 (US)
(72) Inventor: Pal, Debabrata, Hoffman Estates, IL Illinois 60195 (US)
(74) Representative: Bridge, Kerry Ann

(57) **Abstract**

A motor assembly cooling arrangement includes a first plurality of laminations, 10, having a first radially inner surface, 16, defining a centrally disposed aperture and a first radially outer surface, 14. Also included is a second plurality of laminations, 12, having a second radially inner surface, 20, substantially corresponding to the first radially inner surface, 16, and a second radially outer surface, 22, having plurality of circumferentially spaced fins, 24, extending radially outwardly from the second radially outer surface, 22. Further included is at least one axial cooling channel, 40, extending proximate the first radially outer surface, 14, and the second radially outer surface, 22, the at least one axial cooling channel, 40, defined by the plurality of circumferentially spaced fins, 24.

## Description

### BACKGROUND OF THE INVENTION

The present invention relates to motor assemblies, and more particularly to a cooling arrangement for a motor assembly, as well as a method of cooling the motor assembly.

Environmental control systems (ECS) are utilized on various types of aircraft for several purposes, such as air supply systems and/or cabin conditioning systems for the aircraft. For example, components of the ECS may be utilized to remove heat from various aircraft lubrication and electrical systems and/or used to condition aircraft cabin air. The cabin air conditioner includes one or more cabin air compressors (CACs) which compress air entering the system from an outside source or from a ram air system. The compressed air is delivered to an air cycle system and/or a vapor cycle system to bring it to a desired temperature then delivered to the aircraft cabin. After passing through the cabin, the air is typically exhausted to the outside. The CACs may be driven, for example, by air-cooled electric motors, which are cooled by a flow of air proximate an outer surface of the motor. The flow of cooling air and thus the performance of the electric motor and the CAC are typically limited from the pressure drop from the CAC inlet to the ram air system. The flow of cooling air is particularly limited during high altitude operation of the CAC, where cooling flow from the ram air system is not highly available.

### BRIEF DESCRIPTION OF THE INVENTION

According to one embodiment, a motor assembly cooling arrangement includes a first plurality of laminations having a first radially inner surface defining a centrally disposed aperture and a first radially outer surface. Also included is a second plurality of laminations having a second radially inner surface substantially corresponding to the first radially inner surface and a second radially outer surface having a plurality of circumferentially spaced fins extending radially outwardly from the second radially outer surface. Further included is at least one axial cooling channel extending proximate the first radially outer surface and the second radially outer surface, the at least one axial cooling channel defined by the plurality of circumferentially spaced fins.

According to another embodiment, a method of cooling a motor assembly is provided. The method includes impinging a cooling flow through at least one aperture extending through a motor housing onto a first radially outer surface of a first plurality of laminations. Also included is routing the cooling flow circumferentially along the first radially outer surface within a gap defined by a plurality of circumferentially spaced fins extending radially outwardly from a second radially outer surface of a second plurality of laminations.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:

FIG. 1 is an elevational view of a first lamination;

FIG. 2 is an elevational view of a second lamination having a plurality of circumferentially spaced fins;

FIG. 3 is a schematic illustration of a motor assembly having a cooling flow injected into a plurality of apertures of a motor housing;

FIG. 4 is a schematic, enlarged view of section IV of FIG. 3 further illustrating the cooling flow; and

FIG. 5 is a flow diagram illustrating a method of cooling a motor assembly.

### DETAILED DESCRIPTION OF THE INVENTION

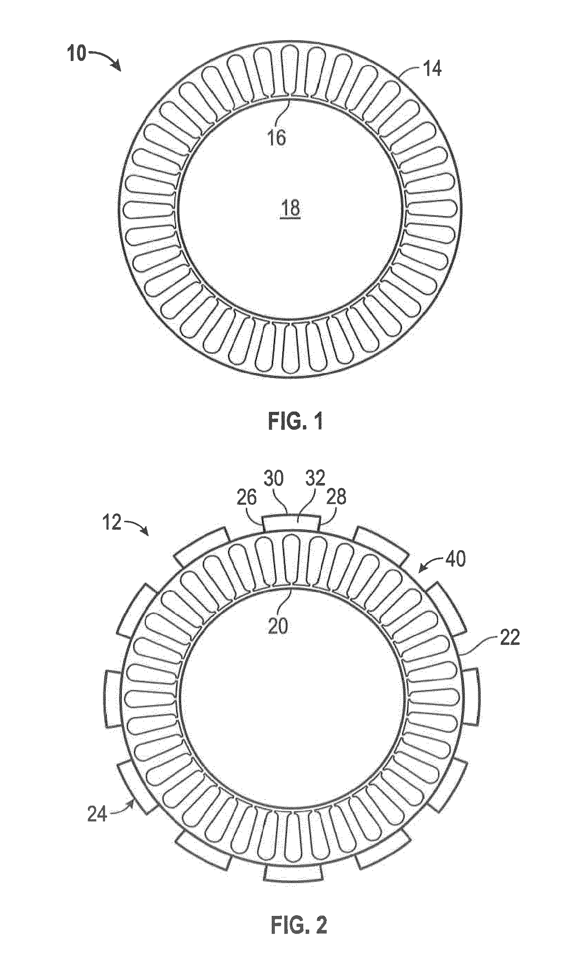

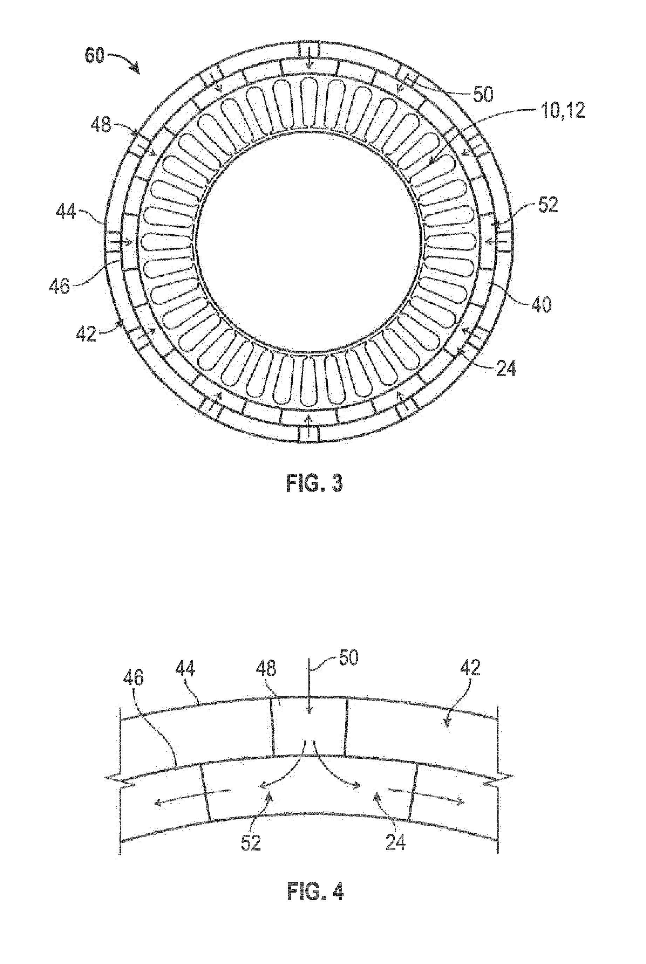

Referring to FIGS. 1 and 2, a first lamination 10 and a second lamination 12 are illustrated. The first lamination 10 and the second lamination 12 are stacked to form a stator core arrangement used in conjunction with a motor assembly 60 (FIG. 3). The motor assembly 60 may be employed in numerous applications, and in one embodiment the motor assembly 60 is a cabin air compressor motor configured to operate in a vehicle, such as an aircraft. Although not illustrated in detail, the first lamination 10 and the second lamination 12 are stacked in an alternating arrangement, however, it is to be appreciated that a truly alternating arrangement is not required and the stacked arrangement may take the form of multiple adjacent first laminations 10 stacked, with one or more adjacent second laminations 12 intermittently included. Conversely, multiple adjacent second laminations 12 may be stacked, with one or more adjacent first laminations 10 intermittently included. Alternatively, a random stacking order of the first laminations 10 and the second laminations 12 may be employed. Based on the stacking of multiple laminations, the first lamination 10 may be referred to as a first plurality of laminations 10 and the second lamination 12 may be referred to as a second plurality of laminations 12.

Each of the first plurality of laminations 10 have a relatively circular geometry that includes a first radially outer surface 14 and a first radially inner surface 16 that defines a centrally disposed aperture 18 configured to house additional motor assembly components. Each of the second plurality of laminations 12 include a second radially inner surface 20 that is similarly situated to that of the first radially inner surface 16. A second radially outer surface 22 is situated similarly to that of the first radially outer surface 14, however, the second radially outer surface 22 includes a plurality of circumferentially spaced fins 24 extending radially outwardly therefrom. As the name suggests, the plurality of circumferentially spaced fins 24 are disposed in a spaced manner around the circumference of the second radially outer surface 22, thereby forming a stage of fins.

Each of the plurality of circumferentially spaced fins 24 is a relatively planar member that includes a thickness similar to that of a thickness of the second plurality of laminations 12. The thickness of both the first plurality of laminations 10 and the second plurality of laminations 12 may vary depending on the application, but in one embodiment the thickness is about 0.014 inches (about 0.356 mm). Each of the plurality of circumferentially spaced fins 24 include a first side 26, a second side 28, a top side 30, a first face 32 and a second face (not labeled) oppositely disposed from the first face 32. It can be appreciated that when configured in a stacked arrangement, the plurality of circumferentially spaced fins 24 of the second plurality of laminations 12, when aligned relative to each other, form an axial cooling channel 40 between each of the plurality of circumferentially spaced fins 24. Specifically, the axial cooling channel 40 is defined by the second radially outer surface 22, the first side 26 of the plurality of circumferentially spaced fins 24 and the second side 28 of an adjacent fin. Based on the low thickness of the first plurality of laminations 10 and the second plurality of laminations 12, the axial cooling channels 40 are configured to route a cooling flow along the first radially outer surface 14 and the second radially outer surface 22 within a motor housing, which will be described in greater detail below.

Referring now to FIGS. 3 and 4, a motor housing 42 surroundingly encloses the first plurality of laminations 10 and the second plurality of laminations 12. Specifically, the motor housing 42 includes a radially outer portion 44 and a radially inner portion 46, with the radially inner portion 46 configured to closely surround the top side 32 of each of the plurality of circumferentially spaced fins 24. The motor housing 42 also includes at least one, but typically a plurality of apertures 48 located at numerous circumferential and/or axial locations of the motor housing 42. The plurality of apertures 48 extend completely through the motor housing 42, each thereby configured to allow a cooling flow 50 to be routed through the plurality of apertures 48 from a region external to the motor housing 42.

The cooling flow 50 is impinged through the plurality of apertures 48 into a gap 52 defined by adjacent stages of the plurality of circumferentially spaced fins 24. The alternating arrangement of the first plurality of laminations 10 and the second plurality of laminations 12 results in the gap 52, based on the spacing of each stage of the plurality of circumferentially spaced fins 24 by the first plurality of laminations 10. Therefore, the gap 52 is specifically defined by the first face 32 of the plurality of circumferentially spaced fins 24 and the second face of an adjacent stage of the plurality of circumferentially spaced fins 24. The cooling flow 50 is impinged into the gap 52 which then initially routes the cooling flow 50 in a splitting, circumferential direction toward adjacent axial cooling channels 40. The splitting of the cooling flow 50 results upon impingement of the cooling flow 50 onto the first radially outer surface 14 of the first plurality of laminations 10. The cooling flow 50 provides cooling of the first plurality of laminations 10 and the second plurality of laminations 12 along a circumferential path. Thereafter, the cooling flow 50 is routed into and through the axial cooling channels 40 for cooling of the first plurality of laminations 10 and the second plurality of laminations 12 along an axial path. The cooling scheme described in detail above provides direct cooling over an extensive surface area of the first radially outer surface 14 of the first plurality of laminations 10 and the second radially outer surface 22 of the second plurality of laminations 12.

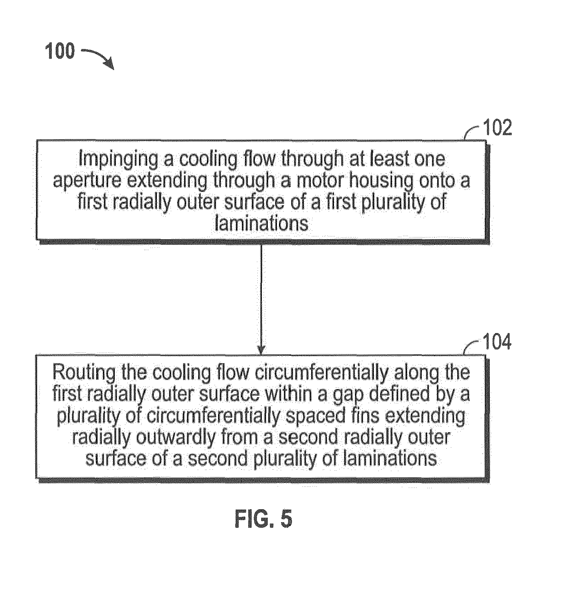

A method of cooling a motor assembly 100 is also provided as illustrated in FIG. 5 and with reference to FIGS. 1-4. The motor assembly 60 and more specifically the first plurality of laminations 10, as well as the second plurality of laminations 12 have been previously described and specific structural components need not be described in further detail. The method for cooling a motor assembly 100 includes impinging a cooling flow through at least one aperture extending through a motor housing onto a first radially outer surface of a first plurality of laminations 102. The cooling flow is routed circumferentially along the first radially outer surface within a gap defined by a plurality of circumferentially spaced fins extending radially outwardly from a second radially outer surface of a second plurality of laminations 104.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A motor assembly cooling arrangement comprising:
a first plurality of laminations (10) having a first radially inner surface (16) defining a centrally disposed aperture and a first radially outer surface (14);
a second plurality of laminations (12) having a second radially inner surface (20) substantially corresponding to the first radially inner surface and a second radially outer surface (22) having a plurality of circumferentially spaced fins (24) extending radially outwardly from the second radially outer surface (22); and
at least one axial cooling channel (40) extending proximate the first radially outer surface (14) and the second radially outer surface (22), the at least one axial cooling channel (40) defined by the plurality of circumferentially spaced fins.

2. The motor assembly cooling arrangement of claim 1, wherein the first plurality of laminations (10) and the second plurality of laminations (12) are disposed in an alternating arrangement, and/or further comprising a gap (52) extending circumferentially proximate the first radially outer surface (14) and defined by the plurality of circumferentially spaced fins (24) disposed on an adjacent set of the second plurality of laminations (12).

3. The motor assembly cooling arrangement of claim 1, wherein the first plurality of laminations (10) and the second plurality of laminations (12) are enclosed by a motor housing extending circumferentially around the plurality of circumferentially spaced fins (24).

4. The motor assembly cooling arrangement of claim 3, further comprising a plurality of apertures (48) extending through the motor housing (60) and circumferentially spaced from each other.

5. The motor assembly cooling arrangement of claim 4, wherein the plurality of apertures (48) are configured to route an impingement cooling flow to a gap (52) extending circumferentially proximate the first radially outer surface (14) and defined by the plurality of circumferentially spaced fins (24) disposed on an adjacent set of the second plurality of laminations (12), wherein the impingement cooling flow (50) is further routed to the at least one axial cooling channel (40) for cooling therealong.

6. The motor assembly cooling arrangement of claim 1, wherein the first plurality of laminations (10) and the second plurality of laminations (12) have a thickness of about 0.014 inches (about 0.356 mm).

7. The motor assembly cooling arrangement of claim 1, wherein the plurality of circumferentially spaced fins (24) include a first side, a second side, a top side, a first face and a second face.

8. The motor assembly cooling arrangement of claim 7, wherein the at least one axial cooling channel (40) is defined by the first side of each of the plurality of circumferentially spaced fins (24) and the second side of each of the plurality of circumferentially spaced fins.

9. The motor assembly cooling arrangement of claim 7, wherein the gap (52) is defined by the first face of each of the plurality of circumferentially spaced fins (24) and the second face of each of the plurality of circumferentially spaced fins.

10. A method of cooling a motor assembly (60) comprising:
impinging a cooling flow (50) through at least one aperture (48) extending through a motor housing (60) onto a first radially outer surface (14) of a first plurality of laminations (10); and
routing the cooling flow circumferentially along the first radially outer surface (14) within a gap (52) defined by a plurality of circumferentially spaced fins (24) extending radially outwardly from a second radially outer surface of a second plurality of laminations (12).

11. The method of claim 10, further comprising routing the cooling flow (50) axially through at least one axial cooling channel (40) extending proximate the first radially outer surface (14) and the second radially outer surface (22), the at least one axial cooling channel (40) defined by the plurality of circumferentially spaced fins (24).

12. The method of claim 10, further comprising impinging the cooling flow (50) through a plurality of apertures extending through the motor housing at a plurality of circumferential locations.

13. The method of claim 10, further comprising impinging the cooling flow through a plurality of apertures (48) extending through the motor housing (60) at a plurality of axial locations.

14. The method of claim 10, further comprising impinging the cooling flow (50) through a plurality of apertures (48) extending through the motor housing (60) at a plurality of circumferential locations and a plurality of axial locations.

15. The method of claim 11, further comprising routing the cooling flow (50) axially through a plurality of axial cooling channels (40) at a plurality of circumferentially disposed locations defined by the plurality of circumferentially spaced fins (24).
